# EUROPEAN PATENT APPLICATION

(11) **EP 4 671 035 A1**
(43) Date of publication of application: **31.12.2025**
(21) Application number: 24213817.0
(22) Date of filing: 19.11.2024
(51) Int. Cl.: B60L 53/14, B60L 53/22, B60L 53/24

(54) **VEHICLE-TO-VEHICLE CHARGING SYSTEM UTILIZING MOTOR DRIVE SYSTEM AND METHOD OF CONTROLLING THE SAME**

(30) Priority: 24.06.2024 KR 20240082176
(71) Applicant: Hyundai Motor Company, Seoul 06797 (KR); Kia Corporation, Seocho-gu Seoul 06797 (KR)
(72) Inventor: Ham, Do Hyeon, 18280 Gyeonggi-do (KR); Jung, Choul Woo, 18280 Gyeonggi-do (KR); Lee, Sol Bin, 18280 Gyeonggi-do (KR)
(74) Representative: Hoffmann Eitle

(57) **Abstract**

A vehicle-to-vehicle charging system using the motor drive system may include a first battery, an inverter receiving direct current power stored in the battery to convert the received direct current power into three-phase alternating current and outputting the alternating current in motor drive mode, a motor using the alternating current power output from the inverter to generate rotation force in motor drive mode, a charging power input/output end, and a controller controlling the inverter to step up or down the charging power voltage based on voltage of a second battery of the other vehicle to supply the charging power to the other vehicle through the charging power input/output end once a vehicle-to-vehicle charging mode in which the other vehicle is electrically connected and the charging power of the first battery is used to charge the second battery of the other vehicle is initiated.

## Description

### BACKGROUND OF THE PRESENT DISCLOSURE

### Field of the Present Disclosure

The present disclosure relates to a vehicle-to-vehicle charging system and a control method, which may adjust the charging power voltage using a motor drive system to supply the adjusted charging power to the other vehicle regardless of the battery voltage of the other vehicle.

### Description of Related Art

Electrified vehicles such as electric vehicles or plug-in hybrid vehicles typically convert power provided by external charging facilities into a state suitable for charging the in-vehicle battery and provide the converted power to the battery for battery charging.

Recently, research has been conducted on the so-called vehicle-to-vehicle charging method, by which the power stored in the battery of one vehicle instead of an external charging facility is used to charge the battery of the other vehicle. However, since the voltage specifications of the battery installed in each vehicle differ, vehicle-to-vehicle charging can be difficult when the voltage standards of the power-supplying vehicle and power-receiving vehicle do not match. One solution to the present issue may be that the receiving or supplying side carries a direct current converter that steps up or down the charging power. However, direct current converters suitable for stepping up or down the high-voltage power of vehicle batteries are often very heavy, bulky, and expensive.

Therefore, there is a problem that installing an additional direct current converter on the vehicle for vehicle-to-vehicle charging, which is relatively less frequently used than external charging facilities, is quite burdensome.

The information included in this Background of the present disclosure is only for enhancement of understanding of the general background of the present disclosure and may not be taken as an acknowledgement or any form of suggestion that this information forms the prior art already known to a person skilled in the art.

### BRIEF SUMMARY

Various aspects of the present disclosure is directed to providing a vehicle-to-vehicle charging system and a control method thereof, which can perform vehicle-to-vehicle charging regardless of the battery voltage of the charging power of the charging power-receiving vehicle.

The technical object of an exemplary embodiment of the present disclosure are not limited to the technical objects mentioned above, and other technical objects not mentioned will be clearly understood by those skilled in the art to which the present disclosure pertains from the following description.

The vehicle-to-vehicle charging system using a motor drive system according to an exemplary embodiment of the present disclosure, as a means of addressing the technical issues described above, may include a first battery; an inverter receiving direct current power stored in the battery to convert the received direct current power into three-phase alternating current and outputting the alternating current power in motor drive mode; a motor using the three-phase alternating current power output from the inverter to generate rotation force in motor drive mode; a charging power input/output end to which a connector is configured to be connected; and a controller configured for controlling the inverter to step up or down the charging power voltage based on the voltage of a second battery of the other vehicle to supply the charging power to the other vehicle through the charging power input/output end once a vehicle-to-vehicle charging mode in which the other vehicle is electrically connected through the connector and the charging power of the first battery is used to charge the second battery of the other vehicle is initiated.

For example, the charging power input/output end may include a positive (+) terminal selectively connectable to a positive (+) direct current end of the inverter, a positive (+) pole of the battery, or a neutral point of the motor; and a negative (-) terminal selectively connectable to the negative (-) direct current end of the inverter.

For example, the vehicle-to-vehicle charging system may further include a connector positive (+) switch including a first end connected to the positive (+) direct current end of the inverter and a second end connected to the positive (+) terminal of the charging power input/output end; a connector negative (-) switch including a first end connected to the negative (-) direct current end of the inverter and a second end connected to the negative (-) terminal of the charging power input/output end; a step-up switch including a first end connected to the positive (+) pole of the first battery; a step-down switch including a first end connected to a second end of the step-up switch and a second end connected to the positive (+) terminal of the charging power input/output end; a main relay including a first end connected to the positive (+) pole of the battery and a second end connected to the inverter; and a charging capacitor connected between the neutral point of the motor and the negative (-) direct current end of the inverter.

For example, the controller may be configured for controlling the status of the connector positive (+) switch, connector negative (-) switch, step-down switch, step-up switch, and main relay based on the voltage of the second battery to configure a boost converter topology or a buck converter topology.

For example, when the voltage of the second battery meets a preset first condition, the controller may short-circuit the main relay, the connector negative (-) switch, and the step-down switch and open the connector positive (+) switch to configure the buck converter topology.

For example, the controller may be configured for controlling the duty ratio of the top-side switching elements of the inverter based on the voltage of the first battery and the voltage of the second battery.

For example, when the voltage of the second battery meets a preset second condition, the controller may short-circuit the connector positive (+) switch, the connector negative (-) switch, and the step-up switch and open the main relay to configure the boost converter topology.

For example, the controller may be configured for controlling the duty ratio of the bottom-side switching elements of the inverter based on the voltage of the first battery and the voltage of the second battery.

For example, the vehicle-to-vehicle charging system may further include a neutral point switch disposed between the neutral point and the charging capacitor.

For example, the controller may short-circuit the neutral point switch in the vehicle-to-vehicle charging mode.

According to the vehicle-to-vehicle charging system using a motor drive system, the motor drive system and a plurality of switches may be controlled to step up or down the charging power to match the battery voltage of the receiving vehicle and supply the adjusted charging power to the receiving vehicle.

This approach allows vehicle-to-vehicle charging to be performed regardless of the battery voltage of the receiving vehicle without an additional direct current converter.

The effects obtainable from the present disclosure are not limited to the effects mentioned above, and other effects not mentioned may be clearly understood by those skilled in the art to which the present disclosure pertains from the following description.

The methods and apparatuses of the present disclosure have other features and advantages which will be apparent from or are set forth in more detail in the accompanying drawings, which are incorporated herein, and the following Detailed Description, which together serve to explain certain principles of the present disclosure.

### BRIEF DESCRIPTION OF THE DRAWINGS

FIG. 1 is a circuit diagram of a vehicle-to-vehicle charging system using a motor drive system according to an exemplary embodiment of the present disclosure.
FIG. 2 is a circuit diagram of a single-phase portion of a vehicle-to-vehicle charging system according to an exemplary embodiment of the present disclosure.
FIG. 3 is a circuit diagram illustrating an operation of a vehicle-to-vehicle charging system using a motor drive system when the voltage of the receiving vehicle is low according to an exemplary embodiment of the present disclosure.
FIG. 4 is a circuit diagram illustrating an operation of a vehicle-to-vehicle charging system using a motor drive system when the voltage of the receiving vehicle is high according to an exemplary embodiment of the present disclosure.
FIG. 5 is a flowchart showing an example of a vehicle-to-vehicle charging process using a motor drive system according to an exemplary embodiment of the present disclosure.
FIG. 6 is a graph for describing the charging situation when the voltage of the receiving vehicle is low in a vehicle-to-vehicle charging system using a motor drive system according to an exemplary embodiment of the present disclosure.
FIG. 7 is a graph for describing the charging situation when the voltage of the receiving vehicle is high in a vehicle-to-vehicle charging system using a motor drive system according to an exemplary embodiment of the present disclosure.

It may be understood that the appended drawings are not necessarily to scale, presenting a somewhat simplified representation of various features illustrative of the basic principles of the present disclosure. The specific design features of the present disclosure as included herein, including, for example, specific dimensions, orientations, locations, and shapes will be determined in part by the particularly intended application and use environment.

In the figures, reference numbers refer to the same or equivalent portions of the present disclosure throughout the several figures of the drawing.

### DETAILED DESCRIPTION

Reference will now be made in detail to various embodiments of the present disclosure(s), examples of which are illustrated in the accompanying drawings and described below. While the present disclosure(s) will be described in conjunction with exemplary embodiments of the present disclosure, it will be understood that the present description is not intended to limit the present disclosure(s) to those exemplary embodiments of the present disclosure. On the other hand, the present disclosure(s) is/are intended to cover not only the exemplary embodiments of the present disclosure, but also various alternatives, modifications, equivalents and other embodiments, which may be included within the spirit and scope of the present disclosure as defined by the appended claims.

Hereinafter, various exemplary embodiments disclosed in an exemplary embodiment of the present disclosure will be described in detail with reference to the accompanying drawings. However, the same reference numerals will be assigned to the similar or same components regardless of drawing numbers and repetitive descriptions will be omitted. The suffixes "module" and "unit" for the components used in the following description are provided or interchangeably used only to facilitate the writing of the specification, without necessarily indicating a distinct meaning or role of their own. Furthermore, when it is determined that the specific description of the related and already known technology may obscure the essence of the embodiments disclosed herein, the specific description will be omitted. Furthermore, it is to be understood that the accompanying drawings are only intended to facilitate understanding of the embodiments disclosed herein and are not intended to limit the technical ideas disclosed herein are not limited to the accompanying drawings and include all the modifications, equivalents, or substitutions within the spirit and technical scope of the present disclosure.

The terms including ordinal numbers such as first, second, and the like may be used to describe various components, but the components are not to be limited by the terms. The terms may only be used for distinguishing one component from another.

It is to be understood that when a component is referred to as being "connected" or "coupled" to another component, the component may be directly connected or coupled to the another component, but other components may be interposed therebetween. In contrast, it is to be understood that no other component is interposed when a component is referred to as being "directly connected" or "directly coupled" to another component.

Singular expressions include plural expressions unless the context explicitly indicates otherwise.

In the present specification, terms such as "comprise" or "have" are intended to indicate the presence of implemented features, numbers, steps, manipulations, components, parts, or combinations thereof described in the specification and are not to be understood to preclude the presence or additional possibilities of at least one of other features, numbers, steps, manipulations, components, parts or combinations thereof.

Furthermore, a unit or a control unit included in the names such as a motor control unit (MCU), a hybrid control unit (HCU), and the like is a term widely used in the naming of control units that control specific functions of a vehicle and does not mean a generic function unit. For example, each control unit may include a communication device that communicates with other control units or sensors to control the functions for which the control unit is responsible, a memory that stores a drive system or logic instructions and input and output information, and one or more processors that perform determinations, calculations, decisions, and the like required for controlling the functions for which the control unit is responsible.

Hereinafter, a vehicle-to-vehicle charging system using a motor drive system and a control method thereof according to various embodiments will be described in detail with reference to accompanying drawings.

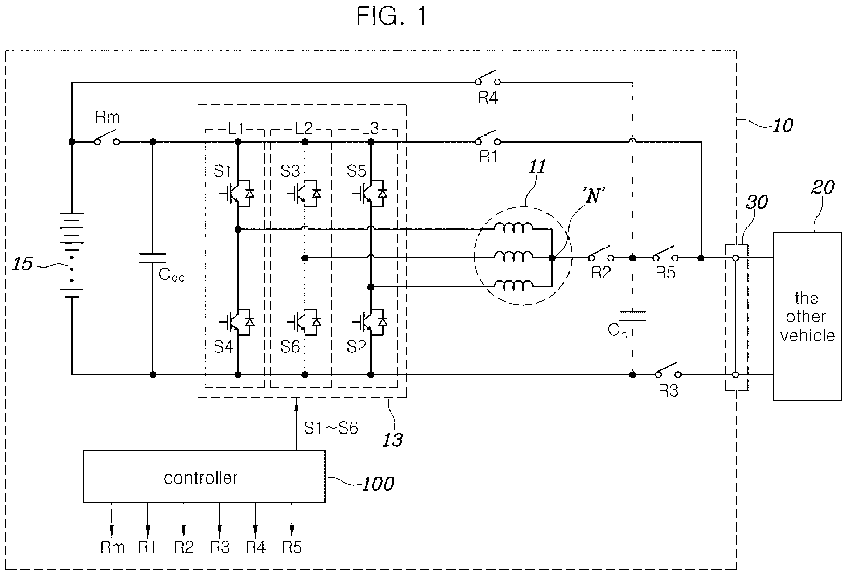

FIG. 1 is a circuit diagram of a vehicle-to-vehicle charging system using a motor drive system according to an exemplary embodiment of the present disclosure.

FIG. 1 shows that the vehicle-to-vehicle charging system 10 according to an exemplary embodiment of the present disclosure properly is configured to control the connection status of relays Rm, R1, R2, R3, R4, R5 based on the battery voltage level of the other vehicle 20 to step up or down the power of a battery 15 using an inverter 13 provided to drive a motor 11 and supplies the adjusted power to the other vehicle 20 to perform vehicle-to-vehicle charging.

The system for driving the motor 11 may typically include the battery 15, which is an energy storage device storing power to drive the motor 11, and the inverter 13, which converts direct current power stored in the battery 15 into three-phase alternating current power and provides the alternating current power to the motor 11. The inverter 13 has three legs L1, L2, L3 connected in parallel to the positive (+) and negative (-) terminals of the battery 15. Each of the legs L1, L2, L3 has two switching elements (two out of S1, S2, S3, S4, S5 and S6) connected in series to each other, and drive power for one phase is provided to the motor 11 from the connection node of the two switching elements. In the present way, energy flows from the battery 15 in the direction of the motor 11 in the motor drive mode in which the motor 11 is driven in FIG. 1.

In contrast, unlike the energy flow for motor drive described above, energy flows from an external charging facility to the battery 15 in the normal charging mode in which the battery 15 is charged through the external charging facility. The external charging facility may be directly connected to the battery 15 to provide charging power to the battery 15, or the external charging power provided to the neutral point N of the motor 11 is provided to the legs corresponding to each phase of the inverter 11 and the switching elements of each leg are controlled to step up the voltage and then the stepped-up voltage is provided to the battery 15 to charge the battery 15, depending on the voltage level of the charging power provided by the external charging facility.

Here, one of the three-phase coils of the motor 11 and one of the switching elements S1, S2, S3, S4, S5 and S6 in the legs L1, L2 and L3 of the inverter 13 connected thereto may configure one step-up circuit in the charging mode in which energy flows from a charging facility to the battery 15. In other words, the three-phase motor and the three-phase inverter configure a circuit in which a total of three step-up circuits are connected in parallel between the neutral point N of the motor 11 and the battery 15.

In the motor drive system according to an exemplary embodiment of the present disclosure, the controller 100 may be configured for controlling the connection status of the relays R1, R2 based on the voltage level of the charging power provided by the charging facility 20.

When the voltage of the direct current power provided by the charging facility is sufficient to charge the battery, the controller 100 may be configured for controlling the first relay R1 into a short-circuit state and apply the direct current power to the battery 15 directly. Furthermore, when the voltage of the direct current power provided by the charging facility is lower than the voltage of the battery 15, the controller 100 may be configured for controlling the second relay R2 and the fifth relay R5 into a short-circuit state, step up the voltage of the direct current power of the charging facility to the desired level through duty ratio control of the switching elements S 1, S2, S3, S4, S5 and using the inductance of the coils in the motor 11 and the step-up circuit formed by the switching elements S1, S2, S3, S4, S5 and S6 of the inverter 13, and then apply the stepped-up voltage to the battery 15.

Here, the first relay R1 is configured to determine the electrical connection status between the battery 15 and the charging power input/output end 30 through which the charging power is input, and the second relay R2 and the fifth relay R5 determine the electrical connection status between the neutral point N of the motor 11 and the charging power input/output end 30.

In the implementation, the charging power input/output end 30 may take the form of a charging port (inlet) for charging cable engagement and may further include at least one communication line terminal, depending on the specifications. When the communication line is engaged through the communication line terminal, the controller 100 may collect battery voltage information of the recipient vehicle through the communication line in the vehicle-to-vehicle charging mode described below.

A multi-input charging system using a motor drive system according to an exemplary embodiment of the present disclosure may further include a main relay Rm, a third relay R3, and a fourth relay R4. The main relay Rm may be connected between the battery 15 and the inverter 13 but determine the electrical connection between the battery 11 and the inverter 13, and the third relay R3 may be configured to determine the electrical connection between the charging power input/output end 30 and the rest of the charging system. Furthermore, the fourth relay R4 may be configured to form a path for stepping up the power of the battery 15 in the vehicle-to-vehicle charging mode described below. Furthermore, a fifth relay R5 may be configured to form a path for stepping down the voltage of the battery 15 in the vehicle-to-vehicle charging mode as well as determine the electrical connection status between the neutral point N of the motor 11 and the charging power input/output end 30.

Furthermore, the vehicle-to-vehicle charging system using a motor drive system according to an exemplary embodiment of the present disclosure may further include a neutral point capacitor Cn connected between the positive (+) terminal and the negative (-) terminal of the charging power input/output end 30 through which charging power is received from a charging facility or provided to the other vehicle 20 and a direct current capacitor Cdc provided in the input end of the inverter 13.

In various embodiments of the present disclosure, the controller 100 may first charge the neutral point capacitor Cn through power conversion before short-circuiting the third relay R3 to receive the charging power input from a charging facility.

On the other hand, the power of the battery 15 is adjusted to a voltage suitable for charging the battery provided in the other vehicle 20 and supplied to the other vehicle 20 through the charging power input/output end 30 in the vehicle-to-vehicle charging mode according to the exemplary embodiment of the present disclosure. To the present end, as described above, the controller 100 may receive battery voltage information of the other vehicle 20 through the communication terminal of the charging power input/output end 30 according to a preset protocol and control the operation status of the inverter 13 and each of the relays Rm, R1, R2, R3, R4, R5.

The location of each relay will be first described before describing the vehicle-to-vehicle charging mode in more detail.

The main relay Rm may have one end connected to the positive (+) end of the battery 15 and the other end connected to the positive (+) direct current end of the inverter 13.

The first relay R1 may have one end connected to the positive (+) direct current end of the inverter 13 and the other end connected to the positive (+) terminal of the charging power input/output end 30. Here, the positive (+) direct current end of the inverter 13 is connected to the same node as one end of the main relay Rm. Therefore, one end of the first relay R1 may be considered to be connected to the other end of the main relay Rm.

The second relay R2 may have one end connected to the neutral point N of the motor 11 and the other end connected to the positive (+) terminal node of the neutral point capacitor Cn.

The third relay R3 may have one end connected to the negative (-) terminal node of the neutral point capacitor Cn and the other end connected to the negative (-) terminal of the charging power input/output end 30. Here, the negative (-) terminal of the neutral point capacitor Cn may share the same node with the negative (-) direct current end of the inverter 13, the negative (-) terminal of the battery 15, and the negative (-) terminal of the direct current capacitor Cdc.

The fourth relay R4 may have one end connected to the positive (+) terminal of the battery 15 and the other end connected to the positive (+) terminal node of the neutral point capacitor Cn.

The fifth relay R5 may have one end connected to the positive (+) end node of the neutral point capacitor Cn and the other end connected to the positive (+) terminal of the charging power input/output end 30.

In view of the above connections, the positive (+) end node of the neutral point capacitor Cn may be considered to be connected to the other end of the second relay R2, the other end of the four relay R4, and one end of the fifth relay R5.

Furthermore, since the first relay R1 determines the connection status between the positive (+) end of the charging connector and the inverter 13 when the charging connector engages the charging power input/output end 30, the first relay R1 may be referred to as a "connector positive (+) relay". Similarly, since the third relay R3 determines the connection status between the negative (-) end of the charging connector and the inverter 13 when the charging connector engages the charging power input/output end 30, the third relay R3 may be referred to as a "connector negative (-) relay".

Since the second relay R2 is disposed between the neutral point N and the neutral point capacitor Cn and determines the connection status between the neutral point N and other nodes, the second relay R2 may be referred to as a "neutral point relay".

Furthermore, since the fourth relay R4 is short-circuited (ON) when the charging power provided from the battery 15 in the vehicle-to-vehicle charging mode described below is stepped up, the fourth relay R4 may be referred to as a "step-up relay". Since the fifth relay R5 is short-circuited (ON) when the charging power provided from the battery 15 in the vehicle-to-vehicle charging mode is stepped down, the fifth relay R5 may be referred to as a "step-down relay".

On the other hand, it is obvious that at least some of the relays Rm, R1, R2, R3, R4, R5 described above may be replaced with other types of switches (e.g., power semiconductors such as IGBT or FET) that can change the connection status between the two ends through electrical control rather than relays. Therefore, each of the relays Rm, R1, R2, R3, R4, R5 may be referred to as a switch.

The operations and operational effects of the vehicle-to-vehicle charging system using the motor drive system according to various embodiments of the present disclosure including the configuration as described above may be more clearly understood through the following description of the multi-input charging method according to various embodiments of the present disclosure.

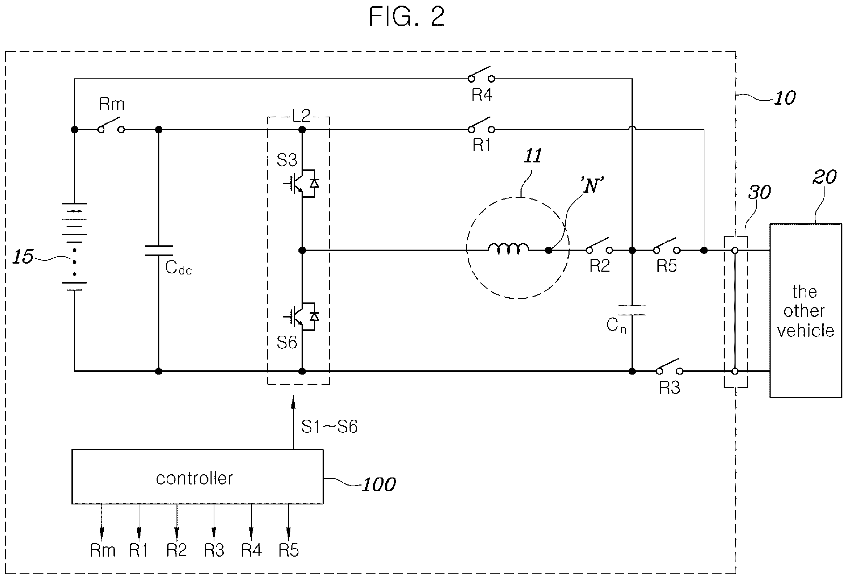

FIG. 2 is a circuit diagram of a single-phase portion of a vehicle-to-vehicle charging system according to an exemplary embodiment of the present disclosure.

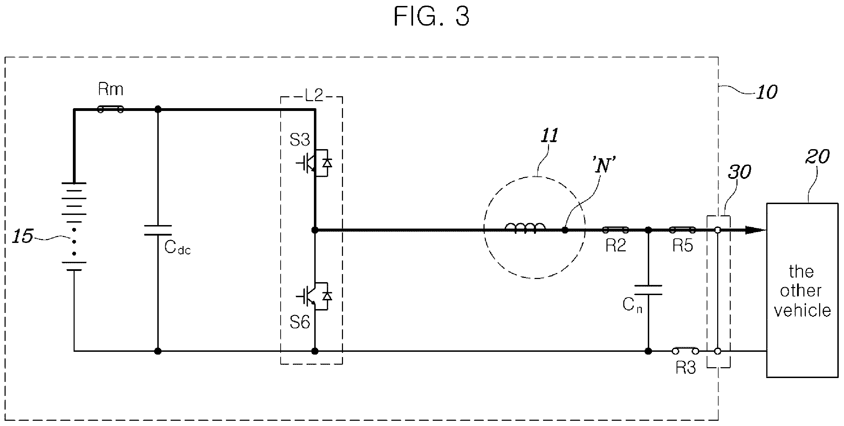

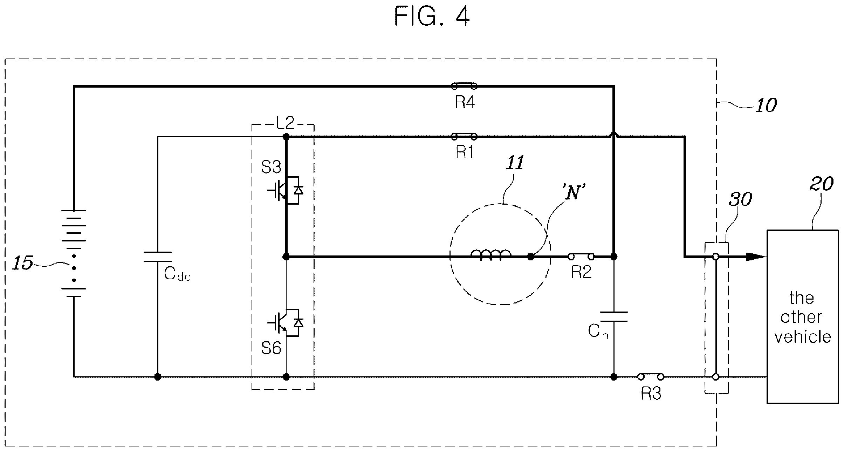

The system 10 illustrated in FIG. 2 shows only the circuit corresponding to one phase of the system in FIG. 1 that assumes a three-phase motor and an inverter. In other words, FIG. 2 illustrates only the second leg L2 among the plurality of legs L1, L2, L3 and one motor winding connected to the arm of the second leg L2. This is for the convenience of description, and other legs of course can join the charging mode operations in an interleaved fashion when a pulse width modulation control is performed after phase shifting. FIG. 3 and FIG. 4 to be referred to in the following description are based on the circuit diagram of FIG. 2, with the description of deactivated (OFF) relays and the circuit to both ends omitted, again for the sake of a concise understanding of the embodiments.

First, a system operation to perform vehicle-to-vehicle charging when the battery voltage of the other vehicle 20 is low relative to the voltage of the battery 15 will be described with reference to FIG. 3.

FIG. 3 is a circuit diagram illustrating an operation of a vehicle-to-vehicle charging system using a motor drive system when the voltage of the receiving vehicle is low according to an exemplary embodiment of the present disclosure.

FIG. 3 assumes that controller 100 receives battery voltage information of the other vehicle 20 through the communication line embedded in the charging connector once the charging connector is connected between the charging power input/output end 30 and the other vehicle 20 and is configured to determine the battery voltage of the other vehicle 20 to be low relative to the voltage of the battery 15 based on the received information. The voltage of the charging power is higher than the voltage of the charging target battery in general, but a low battery voltage in the other vehicle 20 may indicate a significantly large voltage difference so that withstand voltage in the power electronics (PE) system of the other vehicle 20 may be violated if the power of the battery 15 is supplied to the other vehicle 20 without prior voltage adjustment and thus normal charging is rendered impossible. In other words, the present situation calls for stepping down the voltage of the charging power provided from the battery 15 before supplying the power to the charging power input/output end 30.

FIG. 3 shows that the controller 100 may activate (ON) the main relay Rm, the second relay R2, the third relay R3, and the fifth relay R5 and deactivate (OFF) the first relay R1 and the fourth relay R4. Furthermore, the controller 100 may deactivate the bottom-side switching element S6 of the leg L2 and activate (ON) the top-side switching element S3. This allows the formation of a buck converter topology that includes the battery 15, the switching element S3, a diode (a reverse parallel diode of the turned-off S6), an inductor (motor winding), and the capacitor Cn. The ON duty ratio of the top-side switching element S3 may be duly determined by the controller 100 based on the voltage of the battery 15 and the battery voltage of the other vehicle 20. For example, when the voltage of the battery 15 is 800 V and the battery voltage of the other vehicle 20 is 400 V, the desired voltage of the charging power is approximately 500 V so that the duty ratio may be determined to be 5/8 suitable for stepping down the voltage from 800 V to 500 V. However, this is just an illustrative example, to which implementation is not limited.

Next, a system operation to perform vehicle-to-vehicle charging when the battery voltage of the other vehicle 20 is high relative to the voltage of the battery 15 will be described with reference to FIG. 4.

FIG. 4 is a circuit diagram illustrating an operation of a vehicle-to-vehicle charging system using a motor drive system when the voltage of the receiving vehicle is high according to an exemplary embodiment of the present disclosure.

FIG. 4 assumes that controller 100 receives battery voltage information of the other vehicle 20 through the communication line embedded in the charging connector once the charging connector is connected between the charging power input/output end 30 and the other vehicle 20 and is configured to determine the battery voltage of the other vehicle 20 to be high relative to the voltage of the battery 15 based on the received information. This situation calls for stepping up the voltage of the charging power provided from the battery 15 over the battery voltage of the other vehicle 20 before supplying the power to the charging power input/output end 30.

FIG. 4 shows that the controller 100 may activate (ON) the first relay R1, the second relay R2, the third relay R3, and the fourth relay R4 and deactivate (OFF) the main relay Rm and the fifth relay R5. Furthermore, the controller 100 may deactivate the top-side switching element S3 of the leg L2 and activate the bottom-side switching element S6. This allows the formation of a boost converter topology that includes the battery 15, the switching element S6, a diode (a reverse parallel diode of the turned-off S3), an inductor (motor winding), and the capacitor Cn. The ON duty ratio of the top-side switching element S3 may be duly determined by the controller 100 based on the voltage of the battery 15 and the battery voltage of the other vehicle 20. For example, when the voltage of the battery 15 is 400 V and the battery voltage of the other vehicle 20 is 800 V, the desired voltage of the charging power is approximately 1,000 V so that the duty ratio may be determined to be 3/8 suitable for stepping up the voltage from 400 V to 1,000 V. However, this is just an illustrative example, to which implementation is not limited.

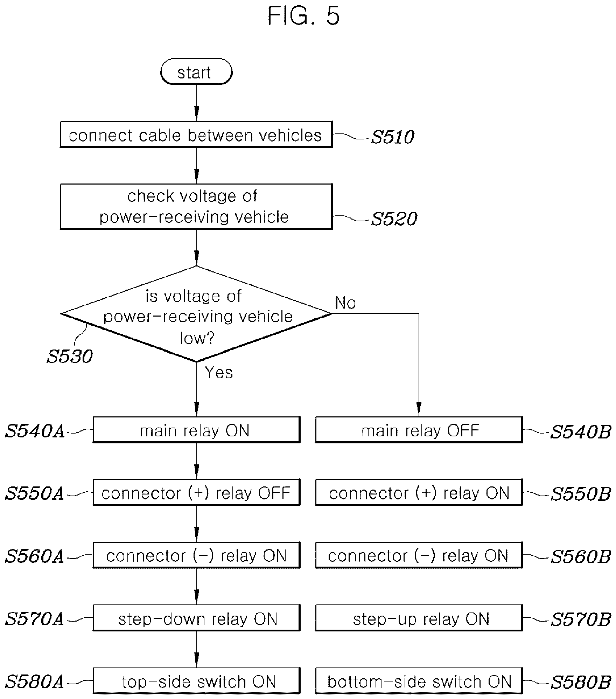

The vehicle-to-vehicle charging procedure according to the exemplary embodiment described thus far is summarized in the flowchart shown in FIG. 5.

FIG. 5 is a flowchart showing an example of a vehicle-to-vehicle charging process using a motor drive system according to an exemplary embodiment of the present disclosure.

FIG. 5 shows that a vehicle provided with the vehicle-to-vehicle charging system 10 using a motor drive system according to an exemplary embodiment and the other vehicle 20 may be connected to each other through a charging cable (S510). In other words, the charging cable may engage the charging power input/output end 30 in the present step.

The controller 100 may check battery voltage information of the other vehicle 20 through the communication line of the charging cable (S520).

When the battery voltage of the power-receiving vehicle, i.e., the other vehicle 20, is determined to be low based on the check results (YES in S530), voltage step-down is required so that the controller 100 may activate the main relay Rm (S540A), deactivate the connector (+) relay R1 (S550A), and activate connector(-) relay R3 (S560A). Furthermore, the controller 100 may activate the step-down relay R5 (S570A) and activate the top-side switching element according to the voltage step-down ratio of the battery 15.

As described above, a low battery voltage in the other vehicle 20 (YES in S530) may indicate a significantly large voltage difference so that application of the voltage of the battery 15 will render normal charging impossible if the voltage is applied to the other vehicle 20 with voltage adjustment.

In contrast, when the battery voltage of the power-receiving vehicle, i.e., the other vehicle 20 is high (NO in S530), voltage step-up is required so that the controller 100 may deactivate the main relay Rm (S540B), activate the connector (+) relay R1 (S550B), and activate the connector (-) relay R3 (S560B). Furthermore, the controller 100 may activate the step-up relay R4 (S570B) and activate bottom-side switching elements according to the voltage step-up ratio of the battery 15 (S580B).

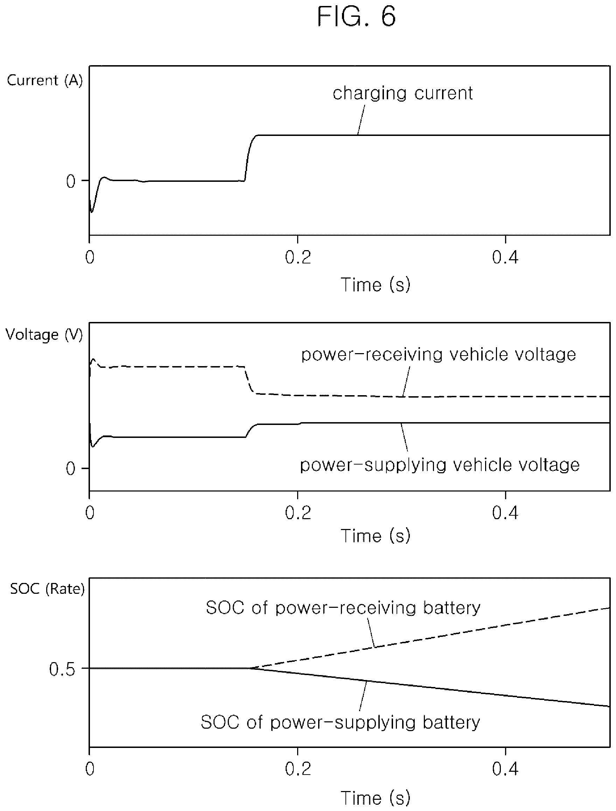

FIG. 6 is a graph for describing the charging situation when the voltage of the receiving vehicle is low in a vehicle-to-vehicle charging system using a motor drive system according to an exemplary embodiment of the present disclosure.

In FIG. 6, the horizontal axis represents the time for all three graphs while the vertical axes represent, from top to bottom, the charging current, voltage, and battery SOC respectively.

FIG. 6 shows that the SOC value of the power-supplying vehicle decreases while the SOC value of the power-receiving vehicle increases once the power conversion and charging power supply are initiated at about 0.15 seconds.

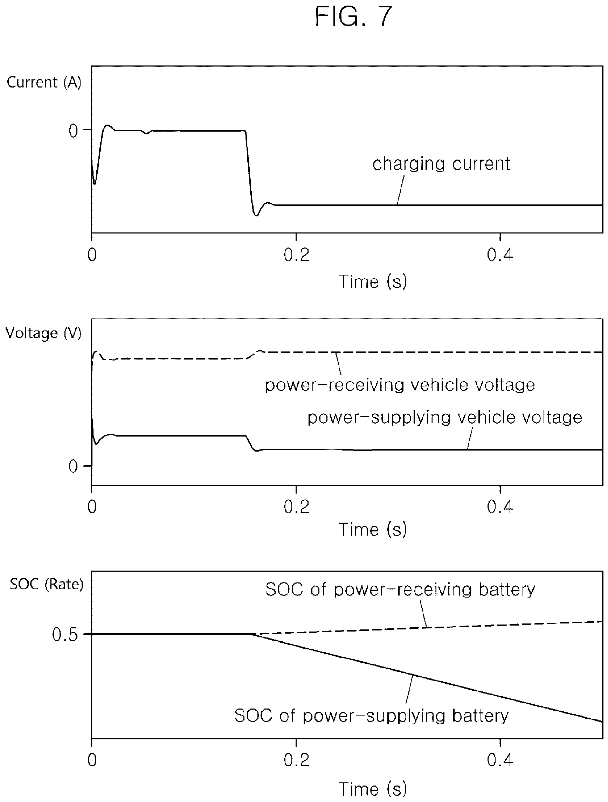

FIG. 7 is a graph for describing the charging situation when the voltage of the receiving vehicle is high in a vehicle-to-vehicle charging system using a motor drive system according to an exemplary embodiment of the present disclosure.

The graph organization in FIG. 7 is similar to that in FIG. 6. Once the power conversion and charging power supply are initiated at about 0.15 seconds, the SOC value of the power-supplying vehicle decreases while the SOC value of the power-receiving vehicle increases. The SOC decrease in the power-supplying vehicle is relatively steeper than in FIG. 6 in which the voltage of the power-receiving vehicle is low. However, this may vary depending on the battery capacity of each vehicle.

On the other hand, since the current sensor is typically positioned between the motor 11 and the inverter 13, the direction of the charging current is reversed due to the topological configuration in FIG. 6 and FIG. 7.

According to the exemplary embodiments described thus far, fast vehicle-to-vehicle charging is possible through the motor drive system without installing an additional converter in the vehicles, regardless of battery voltage.

Furthermore, amid the increasingly wider use of electrified vehicles, vehicle-to-vehicle charging may be a solution to the problems caused by insufficient charging stations, and mobile electric charging may be possible when the vehicle-to-vehicle charging system according to the exemplary embodiments is applied to large vehicles with large battery capacities in particular. Furthermore, waste batteries may be employed in the vehicle-to-vehicle charging system according to the exemplary embodiment to build dedicated charging vehicles, mitigating environmental issues associated with electric vehicle waste.

Furthermore, the term related to a control device such as "controller", "control apparatus", "control unit", "control device", "control module", "control circuit", or "server", etc refers to a hardware device including a memory and a processor configured to execute one or more steps interpreted as an algorithm structure. The memory stores algorithm steps, and the processor executes the algorithm steps to perform one or more processes of a method in accordance with various exemplary embodiments of the present disclosure. The control device according to exemplary embodiments of the present disclosure may be implemented through a nonvolatile memory configured to store algorithms for controlling operation of various components of a vehicle or data about software commands for executing the algorithms, and a processor configured to perform operation to be described above using the data stored in the memory. The memory and the processor may be individual chips. Alternatively, the memory and the processor may be integrated in a single chip. The processor may be implemented as one or more processors. The processor may include various logic circuits and operation circuits, may be configured for processing data according to a program provided from the memory, and may be configured to generate a control signal according to the processing result.

The control device may be at least one microprocessor operated by a predetermined program which may include a series of commands for carrying out the method included in the aforementioned various exemplary embodiments of the present disclosure.

The aforementioned invention can also be embodied as computer readable codes on a computer readable recording medium. The computer readable recording medium is any data storage device that can store data which may be thereafter read by a computer system and store and execute program instructions which may be thereafter read by a computer system. Examples of the computer readable recording medium include Hard Disk Drive (HDD), solid state disk (SSD), silicon disk drive (SDD), read-only memory (ROM), random-access memory (RAM), CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, each operation described above may be performed by a control device, and the control device may be configured by a plurality of control devices, or an integrated single control device.

In various exemplary embodiments of the present disclosure, the memory and the processor may be provided as one chip, or provided as separate chips.

In various exemplary embodiments of the present disclosure, the scope of the present disclosure includes software or machine-executable commands (e.g., an operating system, an application, firmware, a program, etc.) for enabling operations according to the methods of various embodiments to be executed on an apparatus or a computer, a non-transitory computer-readable medium including such software or commands stored thereon and executable on the apparatus or the computer.

In various exemplary embodiments of the present disclosure, the control device may be implemented in a form of hardware or software, or may be implemented in a combination of hardware and software.

Software implementations may include software components (or elements), objectoriented software components, class components, task components, processes, functions, attributes, procedures, subroutines, program code segments, drivers, firmware, microcode, data, database, data structures, tables, arrays, and variables. The software, data, and the like may be stored in memory and executed by a processor. The memory or processor may employ a variety of means well-known to a person including ordinary knowledge in the art.

Furthermore, the terms such as "unit", "module", etc. included in the specification mean units for processing at least one function or operation, which may be implemented by hardware, software, or a combination thereof.

In the flowchart described with reference to the drawings, the flowchart may be performed by the controller or the processor. The order of operations in the flowchart may be changed, a plurality of operations may be merged, or any operation may be divided, and a predetermined operation may not be performed. Furthermore, the operations in the flowchart may be performed sequentially, but not necessarily performed sequentially. For example, the order of the operations may be changed, and at least two operations may be performed in parallel.

Hereinafter, the fact that pieces of hardware are coupled operatively may include the fact that a direct and/or indirect connection between the pieces of hardware is established by wired and/or wirelessly.

In an exemplary embodiment of the present disclosure, the vehicle may be referred to as being based on a concept including various means of transportation. In some cases, the vehicle may be interpreted as being based on a concept including not only various means of land transportation, such as cars, motorcycles, trucks, and buses, that drive on roads but also various means of transportation such as airplanes, drones, ships, etc.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "internal", "external", "forwards", and "backwards" are used to describe features of the exemplary embodiments with reference to the positions of such features as displayed in the figures. It will be further understood that the term "connect" or its derivatives refer both to direct and indirect connection.

The term "and/or" may include a combination of a plurality of related listed items or any of a plurality of related listed items. For example, "A and/or B" includes all three cases such as "A", "B", and "A and B".

In exemplary embodiments of the present disclosure, "at least one of A and B" may refer to "at least one of A or B" or "at least one of combinations of at least one of A and B". Furthermore, "one or more of A and B" may refer to "one or more of A or B" or "one or more of combinations of one or more of A and B".

In the present specification, unless stated otherwise, a singular expression includes a plural expression unless the context clearly indicates otherwise.

In the exemplary embodiment of the present disclosure, it should be understood that a term such as "include" or "have" is directed to designate that the features, numbers, steps, operations, elements, parts, or combinations thereof described in the specification are present, and does not preclude the possibility of addition or presence of one or more other features, numbers, steps, operations, elements, parts, or combinations thereof.

According to an exemplary embodiment of the present disclosure, components may be combined with each other to be implemented as one, or some components may be omitted.

The foregoing descriptions of specific exemplary embodiments of the present disclosure have been presented for purposes of illustration and description. They are not intended to be exhaustive or to limit the present disclosure to the precise forms disclosed, and obviously many modifications and variations are possible in light of the above teachings. The exemplary embodiments were chosen and described in order to explain certain principles of the invention and their practical application, to enable others skilled in the art to make and utilize various exemplary embodiments of the present disclosure, as well as various alternatives and modifications thereof. It is intended that the scope of the present disclosure be defined by the Claims appended hereto and their equivalents.

## Claims

1. A vehicle-to-vehicle charging system(10) comprising:
a first battery(15);
an inverter(13) connected to the first battery(15) and configured to receive direct current power stored in the first battery(15) to convert the received direct current power into three-phase alternating current power and output the three-phase alternating current power in a motor drive mode;
a motor(11) connected to the inverter(13) and configured to generate rotation force in the motor drive mode by use of the three-phase alternating current power output from the inverter(13);
a charging power input/output end(30) to which a connector is configured to be connected; and
a controller(100) operatively connected to the inverter(13) and configured to control the inverter(13) to step up or down a charging power voltage based on a voltage of a second battery of other vehicle(20) to supply a charging power to the other vehicle(20) through the charging power input/output end(30) once a vehicle-to-vehicle charging mode in which the other vehicle(20) is electrically connected through the connector and the charging power of the first battery(1 5) is used to charge the second battery is initiated.

2. The vehicle-to-vehicle charging system of claim 1, wherein the charging power input/output end includes:
a positive (+) terminal selectively connectable to a positive (+) direct current end of the inverter, a positive (+) pole of the first battery, or a neutral point of the motor; and
a negative (-) terminal selectively connectable to a negative (-) direct current end of the inverter.

3. The vehicle-to-vehicle charging system of claim 2, further including:
a connector positive (+) switch(R1) including a first end connected to the positive (+) direct current end of the inverter and a second end connected to the positive (+) terminal of the charging power input/output end;
a connector negative (-) switch(R3) including a first end connected to a negative (-) direct current end of the inverter and a second end connected to the negative (-) terminal of the charging power input/output end;
a step-up switch(R4) including a first end connected to the positive (+) pole of the first battery;
a step-down switch(R5) including a first end connected to a second end of the step-up switch and a second end connected to the positive (+) terminal of the charging power input/output end;
a main relay(Rm) including a first end connected to the positive (+) pole of the first battery and a second end connected to the inverter; and
a charging capacitor(Cn) connected between the neutral point of the motor and the negative (-) direct current end of the inverter.

4. The vehicle-to-vehicle charging system of claim 3, wherein the controller is further configured to control a status of the connector positive (+) switch, the connector negative (-) switch, the step-down switch, the step-up switch, and the main relay based on the voltage of the second battery to configure a boost converter topology or a buck converter topology.

5. The vehicle-to-vehicle charging system of claim 4, wherein the controller is further configured to short-circuit the main relay, the connector negative (-) switch, and the step-down switch and open the connector positive (+) switch to configure the buck converter topology in response that the voltage of the second battery meets a preset first condition.

6. The vehicle-to-vehicle charging system of claim 5, wherein the controller is further configured to control a duty ratio of a top-side switching element of the inverter based on a voltage of the first battery and the voltage of the second battery.

7. The vehicle-to-vehicle charging system of claim 6, wherein the preset first condition is met when the voltage of the first battery is higher than the voltage of the second battery.

8. The vehicle-to-vehicle charging system of claim 7, wherein the controller is further configured to deactivate a bottom-side switching element connected to the top-side switching element and including a diode.

9. The vehicle-to-vehicle charging system of claim 4, wherein the controller is further configured to short-circuit the connector positive (+) switch, the connector negative (-) switch, and the step-up switch and open the main relay to configure the boost converter topology in response that the voltage of the second battery meets a preset second condition.

10. The vehicle-to-vehicle charging system of claim 9, wherein the preset second condition is met when a voltage of the first battery is lower than the voltage of the second battery.

11. The vehicle-to-vehicle charging system of claim 9, wherein the controller is further configured to:
control a duty ratio of a bottom-side switching element of the inverter based on a voltage of the first battery and the voltage of the second battery, and
deactivate a top-side switching element connected to the bottom-side switching element and including a diode.

12. The vehicle-to-vehicle charging system of claim 9, wherein the controller is further configured to deactivate the step-down switch.

13. The vehicle-to-vehicle charging system of claim 3, further including a neutral point switch(R2) disposed between the neutral point and the charging capacitor.

14. The vehicle-to-vehicle charging system of claim 13, wherein a first end of the neutral point switch is connected to the neutral point and a second end thereof is connected to the second end of the step-up switch, the first end of the step-down switch and the charging capacitor.

15. The vehicle-to-vehicle charging system of claim 13, wherein the controller is further configured to short-circuit the neutral point switch in the vehicle-to-vehicle charging mode.
